# EUROPÄISCHE PATENTSCHRIFT

(11) **EP 2 563 618 B1**
(45) Veröffentlichungstag und Bekanntmachung des Hinweises auf die Patenterteilung: **02.08.2017**
(21) Anmeldenummer: 11714490.7
(22) Anmeldetag: 01.04.2011
(51) Int. Cl.: B60N 2/225

(54) **BESCHLAG FÜR EINEN FAHRZEUGSITZ**
FITTING FOR A VEHICLE SEAT
FERRURE POUR UN SIÈGE DE VÉHICULE

(30) Priorität: 28.04.2010 DE 102010018952
(43) Veröffentlichungstag der Anmeldung: 06.03.2013
(73) Patentinhaber: Adient Luxembourg Holding S.à r.l., 2453 Luxembourg (LU)
(72) Erfinder: LEHMANN, Ulrich, 53347 Alfter (DE); STILLEKE, Martin, 45657 Recklinghausen (DE); JOKIEL, Christian, 42579 Heiligenhaus (DE); KOMAINDA, Artur, 42855 Remscheid (DE); BLASS, Eric, 42855 Remscheid (DE)
(74) Vertreter: Liedhegener, Ralf
(86) Internationale Anmeldenummer: PCT/EP2011/001661
(87) Internationale Veröffentlichungsnummer: WO 2011/134584

(56) Entgegenhaltungen:
- WO-A1-02/064397
- WO-A1-2008/080999
- DE-C1- 19 548 809
- DE-U1-202009 007 520

## Beschreibung

Die Erfindung betrifft einen Beschlag für einen Fahrzeugsitz mit den Merkmalen des Oberbegriffs des Anspruches 1.

Mittels einer aus der WO 2008/080999 A1 bekannten Laminattechnik kann die Materialstärke von Bauteilen durch Zusammenfügen mehrerer Einzelteilschichten in axialer Richtung verändert werden. Da die Festigkeit eines Beschlags jedoch nicht nur von dessen axialen Abmessungen abhängt, lässt sich mit dieser Technologie ein optimaler Beschlagbaukasten mit unterschiedlichen Lastklassen nicht erzielen.

Aus der US 7,571,962 B2 ist ein Beschlag bekannt, dessen erstes und zweites Beschlagteil miteinander mittels eines Exzenterumlaufgetriebes in Getriebeverbindung stehen, um die Neigung der Lehne einzustellen. Nachteilig ist, dass ein Anpassung des bekannten Beschlags an projektspezifische Festigkeitsanforderungen nur schwierig oder gar nicht möglich ist. Gleiches gilt für die aus der DE 20 2009 007 520 U1 und der DE 20 2009 015 236 U1 bekannten gattungsgemäßen Beschläge.

Der Erfindung liegt die Aufgabe zu Grunde, einen Beschlag der eingangs genannten Art zu verbessern, insbesondere einen Baukasten mit Beschlägen unterschiedlicher Lastklassen zu erzeugen. Diese Aufgabe wird erfindungsgemäß durch einen Beschlag mit den Merkmalen des Anspruches 1 gelöst. Vorteilhafte Ausgestaltungen sind Gegenstand der Unteransprüche.

Das Konzept der Lastklassen löst die Anforderungen an die Festigkeit (im Crashfall) im Verhältnis zwischen Dimensionierung und Materialeinsparung. Das Konzept der Gleichteile berücksichtigt, dass einige Bauteile, insbesondere die äußeren Bauteile, einen größeren Einfluss auf die Festigkeit haben und daher bezüglich der Lastklassen parametrisiert sind, während andere Bauteile, insbesondere die inneren Bauteile, einen größeren Einfluss auf das Sperren und die Betätigung haben, also Eigenschaften wie Spiel, Betätigungskräfte, Verspannungsempfindlichkeit betreffen, Gleichteile sein können. Die Verwendung von Gleichteilen vereinfacht die Herstellung der Bauteile des Beschlags.

Die parametrisierten Bauteile haben untereinander eine ähnliche Geometrie, unterscheiden sich jedoch in ihren Abmessungen und dem Verhältnis dieser Abmessungen untereinander (was sich auch auf die Übersetzung auswirken kann). Dabei sind die beiden Beschlagteile parametrisierte Bauteile und beziehen dadurch weitere Bauteile ein, die mit ihnen zusammenwirken, wie beispielsweise ein Umklammerungsring, oder als Schnittstelle zu den Gleichteilen dienen, wie beispielsweise ein Sicherungsring oder Dichtring für den Mitnehmer. Die ähnliche Geometrie soll nicht im strengen Sinne der Ähnlichkeitstheorie verstanden werden, sondern in einem weiteren Sinne, wie im Ausführungsbeispiel mit den verschiedenen Lastklassen deutlich wird.

Die Verwendung eines Exzenterumlaufgetriebes erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden. Der Zahnkranz ist vorzugsweise am ersten Beschlagteil und das Zahnrad am zweiten Beschlagteil ausgebildet.

Der Grundanteil beim Sperren des Exzenterumlaufgetriebes wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die vorzugsweise vorgesehenen Keilsegmente, welche den Exzenter definieren, dienen sowohl dem Sperren als auch dem Antreiben der Abwälzbewegung von Zahnrad und Zahnkranz. Ein vorzugsweise vorgesehenes Sperrelement dient dem Sperren des Beschlags unter dynamischen Belastungen.

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äußeren Rand des zweiten Beschlagteils ausgebildet werden kann (welches dann der am ersten Beschlagteil befestigte Umklammerungsring übergreift) und trotzdem ausreichend große Verbindungsbereiche am zweiten Beschlagteil zur Montage des Beschlags zur Verfügung stehen. Gegenüber der bekannten L-förmig profilierten Ausbildung des Umklammerungsrings wird mit der im wesentlichen flache Form des Umklammerungsrings, welcher das erste Beschlagteil nicht mehr vollständig übergreift, weniger Material benötigt, was zu weiteren Einsparungen von Gewicht und Kosten führt. Abweichungen von der flachen Form können beispielsweise axial vorspringende, in Umfangsrichtung verteilte Zentrierabschnitte sein, mittels derer der Umklammerungsring am ersten Beschlagteil vorpositioniert werden kann.

Die erfindungsgemäßen Beschläge dienen vorzugsweise der Einstellung der Lehnenneigung von Fahrzeugsitzen in Kraftfahrzeugen, können jedoch auch an anderer Stelle der Fahrzeugsitze (beispielsweise in Sitzhöheneinstellern), der Kraftfahrzeuge, anderer Fahrzeuge oder außerhalb des Fahrzeugbereichs verwendet werden.

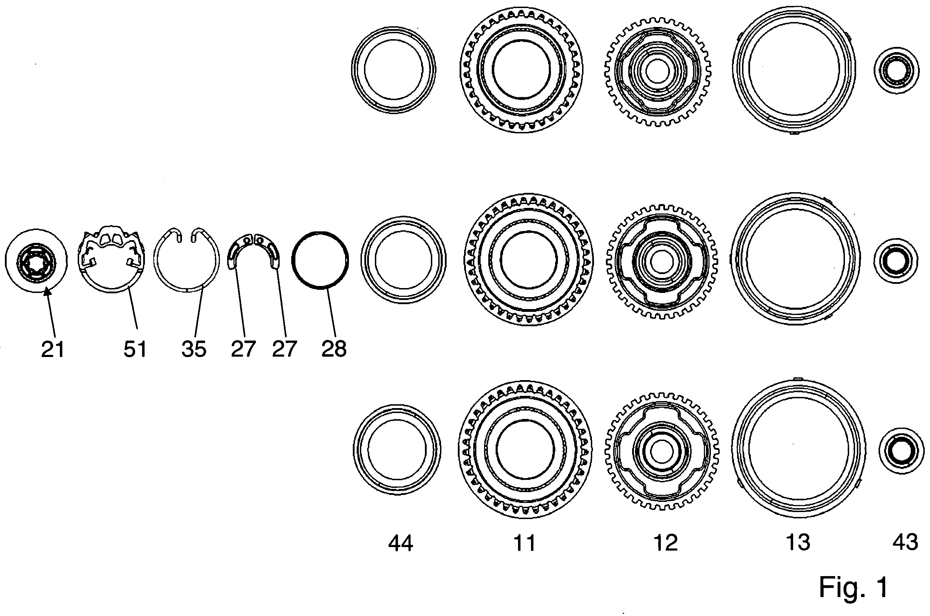

Im folgenden ist die Erfindung anhand eines in der Zeichnung dargestellten Ausführungsbeispiels näher erläutert. Es zeigen
- Fig. 1: eine Darstellung der Gleichteile und parametrisierten Bauteile von drei Lastklassen,

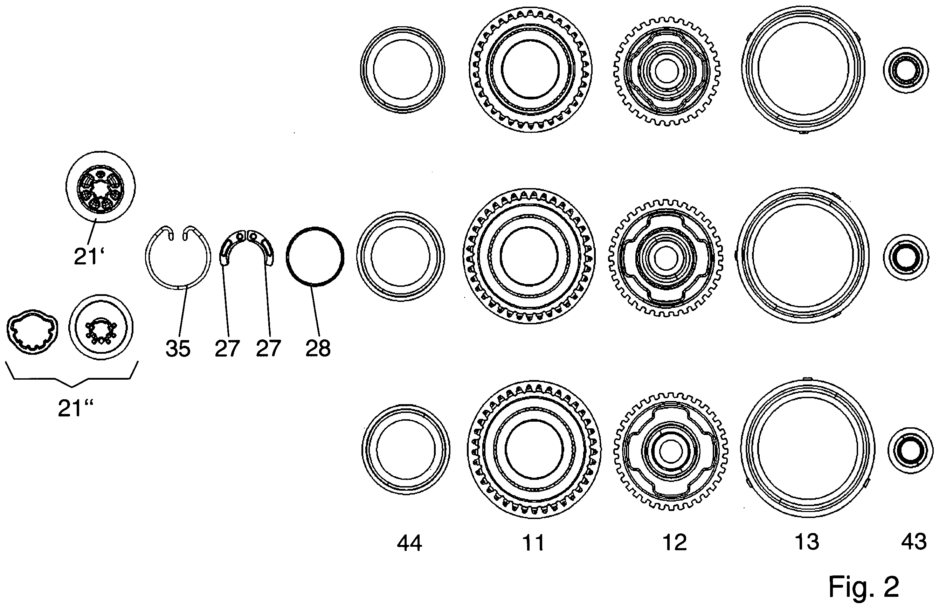

- Fig. 2: eine Erweiterung mit zwei weiteren Typen von Mitnehmern, welche Gleichteile bezüglich der drei Lastklassen sind,

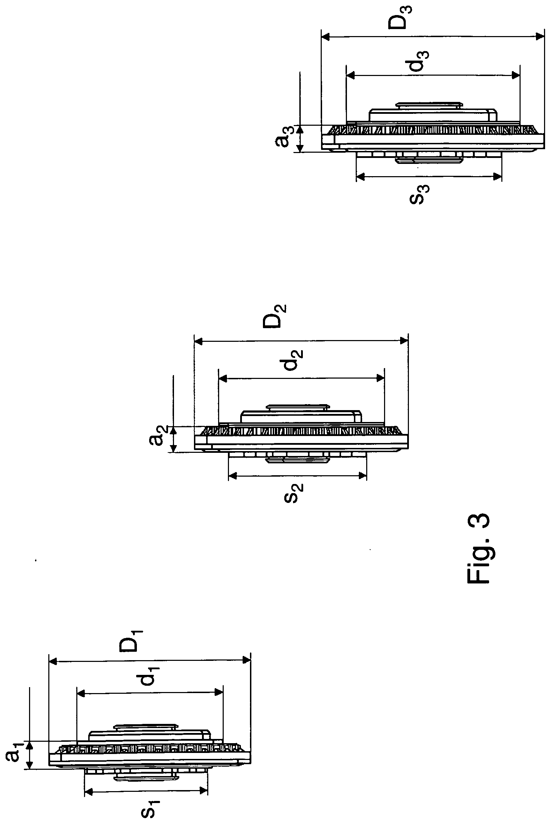

- Fig. 3: Seitenansicht der zusammengebauten Beschläge der drei Lastklassen,

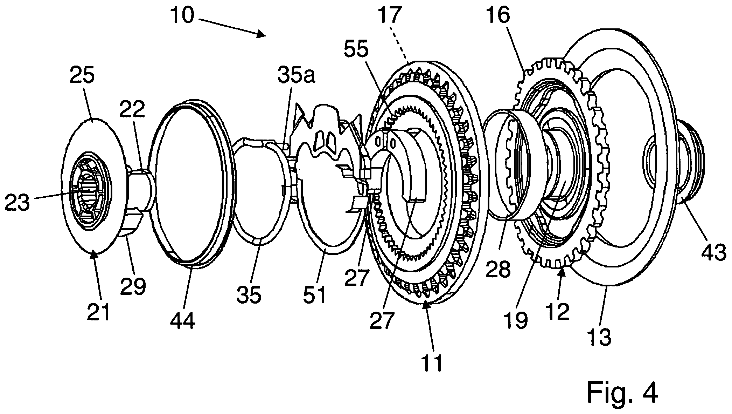

- Fig. 4: eine Explosionsdarstellung eines Beschlags,

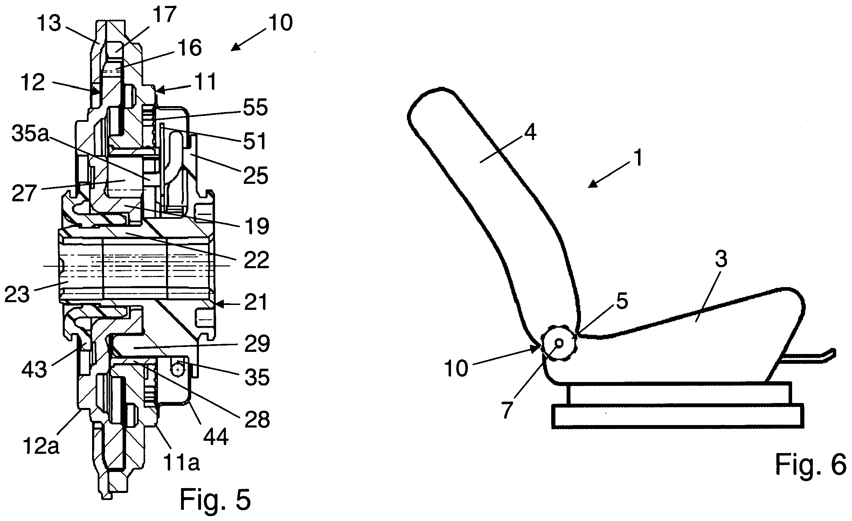

- Fig. 5: einen Schnitt durch einen Beschlag von Fig. 4, und
- Fig. 6: eine schematische Darstellung eines Fahrzeugsitzes.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 B2 beschrieben. Der vorzugsweise metallische Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder (in Umfangsrichtung wenigstens teilweise) umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3, weshalb die beide Beschlagteile 11 und 12 aus Metall bestehen, vorzugsweise aus Stahl. Zur Montage weist das erste Beschlagteil 11 auf seiner axial nach außen weisenden Stirnseite einen Ringabsatz 11a auf, während das zweite Beschlagteil 12 einen Sternabsatz 12a aufweist. Der Ringabsatz 11a und der Sternabsatz 12a greifen dann in passende Aufnahmen der Strukturen von Lehne 4 und Sitzteil 3 und sind vorzugsweise mit dem Rand der Aufnahmen verschweißt.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist. Der Dichtring 44 kann auch aus Metall ausgebildet und mit dem ersten Beschlagteil 11 fest verbunden, beispielsweise verschweißt, sein, wobei dann die Abdeckscheibe 25 relativ zum Dichtring 44 beweglich ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist. Die Sperrfeder 51 wirkt vorliegend mit einer Verzahnung 55 zusammen, die als weiterer Zahnkranz am ersten Beschlagteil 11 ausgebildet ist. Die Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

Erfindungsgemäß ist der Beschlag 10 in verschiedenen Lastklassen ausführbar. Von den im Kraftfluss zwischen Lehne 4 und Sitzteil 3 liegenden Bauteilen sind die inneren Bauteile (oder Teilbereiche von Bauteilen) für alle Lastklassen gleich ausgelegt, also insbesondere der Kragen 19 des zweiten Beschlagteils 12 (genauer gesagt der in Kontakt mit den Keilsegmenten 27 stehende Abschnitt des Kragens 19 hinsichtlich Innendurchmesser und Außendurchmesser), die Keilsegmente 27, die Gleitlagerbuchse 28 und die von ihr ausgekleidete Aufnahme des ersten Beschlagteils 11. Entsprechend sind der Mitnehmer 21, die Keilsegmente 27, die Feder 35, die Sperrfeder 51 und die Gleitlagerbuchse 28 Gleichteile für alle Lastklassen, vorzugsweise auch der Dichtring 44.

Die äußeren Bauteile des Beschlags 10 sind für die einzelnen Lastklassen ausgelegt, also insbesondere das erste Beschlagteil 11 mit dem Zahnkranz 17, das zweite Beschlagteil 12 mit dem Zahnrad 16 und der Umklammerungsring 13. Diese äußeren Bauteile sind parametrisiert, d.h. ihre Abmessungen hängen von der Lastklasse ab. Es dominieren dabei der Zahnkranz 17 und das Zahnrad 16. Deren Durchmesser und axiale Abmessung ("Bautiefe") sind wichtige Parameter, ebenso die Zahnhöhe, die Zahnbreite und der Zahnabstand, indirekt dadurch auch die Anzahl der Zähne. Nach diesen Parametern des Zahnkranzes 17 und des Zahnrades 16 bestimmen sich auch die Außenabmessungen des ersten Beschlagteils 11 und des zweiten Beschlagteils 12, insbesondere der Außendurchmesser und die axiale Abmessung, und infolge dessen auch die Außenabmessungen des Umklammerungsrings 13.

Bevorzugt sind drei Lastklassen, eine kleine Lastklasse (1500 Nm), eine mittlere Lastklasse (2000 Nm) und eine große Lastklasse (2500 Nm), die in dieser Reihenfolge durchnummeriert sein sollen, wobei sich ihre Nummerierung auch auf die Parameter erstrecken soll. Die drei Lastklassen haben axiale Abmessungen a1, a2, a3 zwischen Ringabsatz 11a und Sternabsatz 12a, Außendurchmesser D1, D2, D3 des ersten Beschlagteils 11 und des Umklammerungsrings 13, Ringdurchmesser d1, d2, d3 des Ringabsatzes 11a (d1 = 52 mm, d2 = 60 mm und d3 = 60 mm) und Sterndurchmesser s1, s2 und s3 des Sternabsatzes 12a (s1 = 44 mm, ohne Arme 39,5 mm, s2 = 50 mm, ohne Arme 42 mm, und s3 = 50 mm, ohne Arme 42 mm). Die axialen Abmessungen a1, a2, a3 steigen jeweils um etwa 15 % an (a1 = 8,5 mm ± 3 %; a2 = 9,5 mm, ± 3 %; a3 = 11,0 mm ± 3 %). Von den Außendurchmessern D1, D2, D3 (D1 = 72,0 mm ± 3 %; D2 = 77,0 mm ± 3 %; D3 = 78,0 mm ± 3 %) ist der Außendurchmesser D2 der mittleren Lastklasse um etwa 7 % größer als der Außendurchmesser D1 der kleinen Lastklasse. Von Lastklasse zu Lastklasse steigt (je nach Material) auch das Gewicht um 20 % - 30 % an. Die unterschiedlichen axialen Abmessungen a1, a2, a3 werden vorzugsweise durch unterschiedliche Sicherungsringe 43 ausgeglichen. Der deutlich geringe Außendurchmesser D1 der kleinen Lastklasse bedingt einen kleineren Ringdurchmesser d1 des Ringabsatz 11a (und einen kleineren Sterndurchmesser s1 des Sternabsatzes 12a), so dass gegebenenfalls der am Ringabsatz 11a anliegende Dichtring 44 kein Gleichteil ist, sondern für die kleine Lastklasse ein eigener Dichtring 44 existiert, d.h. der Dichtring 44 ein parametrisierter Bestandteil des Beschlags 10 ist.

In der kleinen Lastklasse (1500 Nm) hat das erste Beschlagteil 11 vorzugsweise eine Dicke von 3,0 mm ± 5 %, einen Kopfkreisdurchmesser von 62 mm ± 3 %, einen Fußkreisdurchmesser von 65 mm ± 3 % und eine Zähnezahl von vorzugsweise 34. In der mittleren Lastklasse (2000 Nm) hat das erste Beschlagteil 11 vorzugsweise eine Dicke von 3,5 mm ± 5 %, einen Kopfkreisdurchmesser von 65 mm ± 3 %, einen Fußkreisdurchmesser von 70 mm ± 3 % und eine Zähnezahl von vorzugsweise 37. In der großen Lastklasse (2500 Nm) hat das erste Beschlagteil 11 vorzugsweise eine Dicke von 4,0 mm ± 5 %, einen Kopfkreisdurchmesser von 65 mm ± 3 %, einen Fußkreisdurchmesser von 70 mm ± 3 % und eine Zähnezahl von vorzugsweise 37. Der Innendurchmesser der Aufnahme für die Gleitlagerbuchse 28 beträgt jeweils 33 mm ± 3 %. Das erste Beschlagteil 11 besteht vorzugsweise aus hochfestem Stahl ohne Wärmebehandlung, alternativ aus C20E-Stahl, der durch eine Wärmebehandlung vergütet ist.

In der kleinen Lastklasse (1500 Nm) hat das zweite Beschlagteil 12 vorzugsweise eine Dicke von 3,0 mm ± 5 %, einen Kopfkreisdurchmesser von 62 mm ± 3 %, einen Fußkreisdurchmesser von 57 mm ± 3 % und eine Zähnezahl von vorzugsweise 33. In der mittleren Lastklasse (2000 Nm) hat das zweite Beschlagteil 12 vorzugsweise eine Dicke von 3,5 mm ± 5 %, einen Kopfkreisdurchmesser von 67 mm ± 3 %, einen Fußkreisdurchmesser von 61 mm ± 3 % und eine Zähnezahl von vorzugsweise 36. In der großen Lastklasse (2500 Nm) hat das zweite Beschlagteil 12 vorzugsweise eine Dicke von 4,0 mm ± 5 %, einen Kopfkreisdurchmesser von 67 mm ± 3 %, einen Fußkreisdurchmesser von 61 mm ± 3 % und eine Zähnezahl von vorzugsweise 36.. Der Außendurchmesser des Kragens 19 beträgt jeweils 21 mm ± 3 %. Das zweite Beschlagteil 12, besteht vorzugsweise aus C20E-Stahl, der durch eine Wärmebehandlung vergütet ist.

Bei der Produktion wird der Beschlag 10 aus den obigen Gleichteilen und parametrisierten Bauteilen in der Art eines Baukastens zusammengebaut, d.h. es wird eine der Lastklassen vorgegeben, und dann werden - abhängig von dieser vorgegebenen Lastklasse die parametrisierten Bauteile, die der vorgegebenen Lastklasse zugeordnet sind, und die Bauteile, die Gleichteile sind für alle Lastklassen, ausgewählt (und aus diesem Baukasten genommen), und der Beschlag 10 wird daraus zusammengebaut. Soweit die Produktionslinien für den Zusammenbau nicht vollständig getrennt sind, kann es von Vorteil sein, den unterschiedlich parametrisierten Bauteilen unterschiedliche Kennzeichnungen zu geben, beispielsweise eine unterschiedliche Farbe bei den Kunststoffteilen.

Das System der Gleichteile und parametrisierten Bauteile des Beschlags 10 kann erweitert werden auf die motorischen Varianten, wie sie in der US 7,314,250 B1 für einen metallischen, einteiligen Mitnehmer 21', beispielsweise aus Zink- oder Aluminiumdruckguss, und in der US 2009/0127910 A1 für einen zweiteiligen Mitnehmer 21" aus einem metallischen Ring (vorzugsweise ein Sintermaterial) mit Mitnehmersegment 29 und einem damit drehfest verbundenen Kunststoffbauteil mit Nabe 22 und Abdeckscheibe 25 beschrieben ist. Der diesbezügliche Offenbarungsgehalt der beiden genannten Druckschriften wird ausdrücklich einbezogen.

Die drei Typen des Mitnehmers, also der oben beschriebene, einteilige Mitnehmer 21 aus Kunststoff (DE 44 36 111 A1), der einteilige Mitnehmer 21' aus Metall (US 7,314,250) und der zweiteilige Mitnehmer 21" (US 2009/0127910 A1) bilden eine Gruppe. Der Mitnehmer ist aus dieser Gruppe zu wählen, ist aber weiterhin ein Gleichteil bezüglich der Lastklassen. Bei den beiden motorischen Varianten mit dem metallischen Mitnehmer 21' und dem zweiteiligen Mitnehmer 21" entfällt allerdings die Sperrfeder 51.

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 11a: Ringabsatz
- 12: zweites Beschlagteil
- 12a: Sternabsatz
- 13: Umklammerungsring
- 16: Zahnrad
- 17: Zahnkranz
- 19: Kragen
- 21: Mitnehmer
- 21': metallischer Mitnehmer
- 21": zweiteiliger Mitnehmer
- 22: Nabe
- 23: Bohrung
- 25: Abdeckscheibe
- 27: Keilsegment
- 28: Gleitlagerbuchse
- 29: Mitnehmersegment
- 35: Feder
- 35a: Endfinger
- 43: Sicherungsring
- 44: Dichtring
- 51: Sperrfeder
- 55: Verzahnung
- a1,a2,a3: axiale Abmessung
- d1,d2,d3: Ringdurchmesser des Ringabsatzes
- D1,D2,D3: Außendurchmesser
- s1,s2,s3: Sterndurchmesser des Sternabsatzes

## Patentansprüche

1. Beschlag für einen Fahrzeugsitz, insbesondere für einen Kraftfahrzeugsitz, mit einem ersten Beschlagteil (11) und einem zweiten Beschlagteil (12), welche miteinander in Getriebeverbindung stehen mittels eines Zahnrades (16) und eines Zahnkranzes (17), die miteinander kämmen, und mit einem von einem Mitnehmer (21) angetriebenen, umlaufenden Exzenter (27, 27) zum Antrieb einer relativen Abwälzbewegung von Zahnrad (16) und Zahnkranz (17), wobei das erste Beschlagteil (11) den Exzenter (27, 27) aufnimmt, welcher sich am zweiten Beschlagteil (12) abstützt, wobei der Beschlag (10) einer von wenigstens zwei Lastklassen zugeordnet ist, und der Beschlag (10) aus Bauteilen, die parametrisiert bezüglich der zugeordneten Lastklasse sind, und aus Bauteilen, die Gleichteile sind für alle Lastklassen, besteht, wobei die Beschlagteile (11, 12) parametrisierte Bauteile sind und der Exzenter (27, 27) zu den Gleichteilen gehört, **dadurch gekennzeichnet, dass** die Durchmesser und die axialen Abmessungen des Zahnkranzes (17) und des Zahnrades (16) parametrisiert sind.

2. Beschlag nach Anspruch 1, **dadurch gekennzeichnet, dass** als eines der parametrisierten Bauteile ein Umklammerungsring (13) vorgesehen ist, welcher das - insbesondere den Zahnkranz (17) aufweisende - erste Beschlagteil (11) und das - insbesondere das Zahnrad (16) aufweisende - zweite Beschlagteil (12) axial zusammenhält unter Bildung einer scheibenförmigen Einheit, und welcher am ersten Beschlagteil (11) befestigt ist und das zweite Beschlagteil (12) radial außen übergreift, wobei der Umklammerungsring (13) insbesondere eine im wesentlichen flache Form aufweist.

3. Beschlag nach einem der vorhergehenden Ansprüche, **dadurch gekennzeichnet, dass** zwei von einer Feder (35) beaufschlagte Keilsegmente (27) den Exzenter (27, 27) definieren, wobei die Keilsegmente (27) und die Feder (35) zu den Gleichteilen gehören.

## Claims

1. Fitting for a vehicle seat, in particular for a motor vehicle seat, having a first fitting part (11) and a second fitting part (12) which are in a geared connection with one another by means of a gearwheel (16) and a crown gear (17) which mesh with one another, and having a circulating eccentric (27, 27) which is driven by a driver (21) in order to drive a relative rolling movement of the gearwheel (16) and the crown gear (17), the first fitting part (11) receiving the eccentric (27, 27) which is supported on the second fitting part (12), the fitting (10) being assigned to one of at least two load classes, and the fitting (10) consisting of components which are parameterized with regard to the associated load class, and of components which are identical parts for all load classes, the fitting parts (11, 12) being parameterized components, and the eccentric (27, 27) belonging to the identical parts, **characterized in that** the diameters and the axial dimensions of the crown gear (17) and the gearwheel (16) are parameterized.

2. Fitting according to Claim 1, **characterized in that** a clasping ring (13) is provided as one of the parameterized components, which clasping ring (13) axially holds together the first fitting part (11) which has, in particular, the crown gear (17) and the second fitting part (12) which has, in particular, the gearwheel (16), with the formation of a disc-shaped unit, and which clasping ring (13) is fastened to the first fitting part (11) and engages over the second fitting part (12) radially on the outside, the clasping ring (13) having, in particular, a substantially flat shape.

3. Fitting according to either of the preceding claims, **characterized in that** two wedge segments (27) which are loaded by a spring (35) define the eccentric (27, 27), the wedge segments (27) and the spring (35) belonging to the identical parts.

## Revendications

1. Ferrure pour un siège de véhicule, en particulier pour un siège de véhicule automobile, comprenant une première partie de ferrure (11) et une deuxième partie de ferrure (12), qui sont en liaison de transmission l'une avec l'autre au moyen d'une roue dentée (16) et d'une couronne dentée (17) qui s'engrènent l'une avec l'autre, et comprenant un excentrique rotatif (27, 27) entraîné par un dispositif d'entraînement (21) pour l'entraînement d'un mouvement de roulement relatif de la roue dentée (16) et de la couronne dentée (17), la première partie de ferrure (11) recevant l'excentrique (27, 27) qui s'appuie sur la deuxième partie de ferrure (12), la ferrure (10) étant associée à l'une d'au moins deux classes de charge, et la ferrure (10) étant constituée de composants qui sont paramétrés par rapport à la classe de charge associée, et de composants qui sont des pièces identiques pour toutes les classes de charge, les parties de ferrure (11, 12) étant des composants paramétrés et l'excentrique (27, 27) appartenant aux pièces identiques, **caractérisée en ce que** le diamètre et les dimensions axiales de la couronne dentée (17) et de la roue dentée (16) sont paramétrés.

2. Ferrure selon la revendication 1, **caractérisée en ce que** l'on prévoit en tant que l'un des composants paramétrés, une bague d'enserrage (13) qui retient ensemble axialement la première partie de ferrure (11) présentant notamment la couronne dentée (17) et la deuxième partie de ferrure (12) présentant notamment la roue dentée (16) en formant une unité en forme de disque, et qui est fixée à la première partie de ferrure (11) et vient en prise radialement à l'extérieur pardessus la deuxième partie de ferrure (12), la bague d'enserrage (13) présentant notamment une forme sensiblement plate.

3. Ferrure selon l'une quelconque des revendications précédentes, **caractérisée en ce que** deux segments de cale (27) sollicités par un ressort (35) définissent l'excentrique (27, 27), les segments de cale (27) et le ressort (35) appartenant aux pièces identiques.
